# EUROPEAN PATENT SPECIFICATION

(11) **EP 1 879 282 B1**
(45) Date of publication and mention of the grant of the patent: **30.11.2011**
(21) Application number: 05792069.6
(22) Date of filing: 26.09.2005
(51) Int. Cl.: H02K 19/18, H02K 3/20

(54) **MINITYPE SINGLE-PHASE GENERATOR WITH TWO POLES**
MINITYP-EINPHASEN-GENERATOR MIT ZWEI POLEN
MINI GENERATEUR MONOPHASE A DEUX POLES

(30) Priority: 04.02.2005 CN 200510020380
(43) Date of publication of application: 16.01.2008
(73) Proprietor: Ai, Chun, Beibei District 400070 Chongqing (CN)
(72) Inventor: Ai, Chun, Beibei District 400070 Chongqing (CN)
(74) Representative: Korga, Leokadia
(86) International application number: PCT/CN2005/001561
(87) International publication number: WO 2006/081723

(56) References cited:
- WO-A1-87/05753
- JP-A- 58 195 449
- JP-A- 59 132 759

## Description

### DESCRIPTION

The present invention relates to a generator, and particularly to a miniature bipolar single-phase generator.

The winding slot of a rotor and the wire-embedding slot of a stator of conventional miniature bipolar single-phase generators (0.45kW-18kW) have a straight slot structure, i.e., both the central line of the winding slot of the rotor and that of the wire-embedding slot of the stator are parallel to the axial line of the generator. Therefore, no angle is formed between the coil of the rotor and the output winding embedded in the core of the stator. When the generator is in operation, the odd order harmonic such as the 3rd, 5th and 7th, and the like, has a large negative influence on the output voltage waveform, causing it to be in a poor shape of serration, and the sinusoidal distortion rate to be usually between 15% and 25%. There is a great deal of harmonics in the waveform, thus making a significant impact on electrical appliances, especially a capacitive load, and causing the electrical appliances to break down earlier than normal, so the application of this type of generator is limited to a certain degree. A prior art generator is disclosed in WO-A-87-0553. The generator disclosed in this document has a rotor with a magnet structure with two poles and conducting bars as windings, and a shorting plate (28a) for connecting the conductors together to provide a damping circuit to reduce reactance and improve voltage balance.

In view of the above-described problems, it is one objective of the invention to provide a miniature bipolar single-phase generator, which solves the problems of poor output voltage waveform, high sinusoidal distortion rate of the waveform and limited application of the miniature bipolar single-phase generator of prior art.

In accordance with one objective of the invention, provided is a miniature bipolar single-phase generator comprising: a rotor and a stator, wherein two damping windings are arranged on the core of the rotor; each of the two damping windings comprises a plurality of damping strips and a damping board; the damping board is disposed on both ends of the core; the damping strip passes in the axial direction through the core, and is tightly attached to the damping board; and a winding coil on the stator is an equidistant bipolar winding structure.

In one class of this embodiment, the number of the damping strips in each of the two damping windings on the core of the rotor is between 4 and 8; a cross section of each of the damping strips is circular with a diameter between 2 and 8 mm; and a thickness of the damping board is between 1 and 8 mm.

In one class of this embodiment, an angle of between 3° and 15° is formed between the winding slot on the core of the rotor and a wire-embedding slot on the core of the stator.

In one class of this embodiment, a plurality of axial grooves is distributed over the outer surface of the core of the stator.

In view of the magnetic force distribution, after two damping windings are mounted on the core of the rotor, the distribution of the magnetic line of the rotor is at an optimum, which weakens the influence of the negative-sequence magnetic field produced by the output winding of the stator on the waveform, decreases the alternating and the direct impedance of the rotor, reduces the hysteresis vortex loss and the temperature rise of the rotor, and thereby achieving the purpose of improving the magnetic path and the output waveform. The equidistant bipolar winding structure adopted by the winding coil allows the magnetic field of the yoke of the stator to be more homogeneous. The magnetic field formed by the primary output winding on the circumference of the stator assumes a sinusoidal distribution, lessening the 3rd, 5th and 7th harmonics' influence on the output voltage waveform, and thereby allowing the output voltage waveform, loaded and non-loaded, to approximate more closely a sine wave. A waveform distortion rate compares with a conventional miniature bipolar single-phase generator as follows:

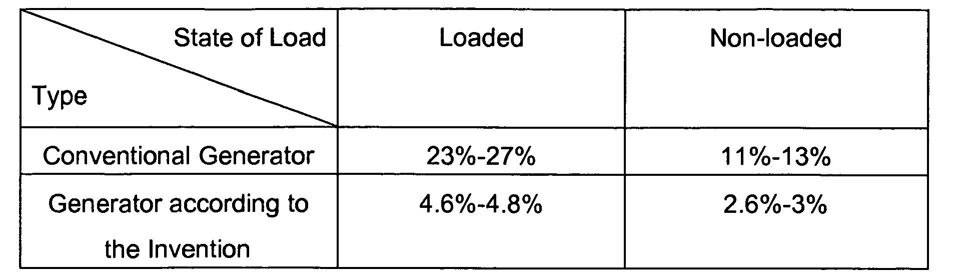

It can be seen from the table above, that when guaranteeing output performance, the sinusoidal distortion rate of the output voltage waveform of the generator can be controlled to within 5%, thus greatly improving the output voltage waveform. Therefore, the application of the miniature bipolar single-phase generator is wide, and the adaptability to a capacitive load is greatly enhanced.

Advantages of the present invention include the stability of the output voltage including a good waveform which better approximates a sine wave, is more adaptable to a capacitive load, and can help to prolong the lifetime of electrical appliances, thereby widening the applicability of the generator.

The invention is described hereinafter with reference to accompanying drawings, in which:

Fig. 1 is an exploded view of the invention;

Fig. 2 is a perspective structural diagram of a core of a rotor 1 in Fig. 1;

Fig. 3 is a front elevational view of a stator 2 in Fig. 1;

Fig. 4 is a top plan view of Fig. 3; and

Fig. 5 illustrates wire-embedding scheme of an equidistant bipolar winding of a coil of the stator 2.

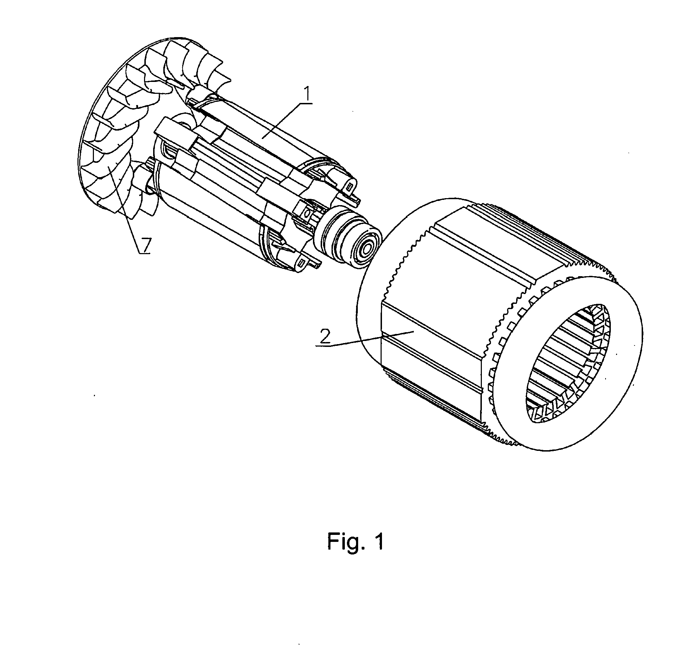

As shown in Figs. 1-5, a 12kW miniature bipolar single-phase generator comprises a rotor 1 and a stator 2. Two damping windings are arranged on a core of the rotor 1, and each of the two damping windings comprises a plurality of damping strips 3 and a damping board 4. The damping board 4 is disposed on both ends of the core. The damping strips 3 pass in the axial direction through the core, and both ends of the damping strip 3 are tightly welded (spot welding) on the damping board 4. A winding coil 2a on the stator 2 is an equidistant bipolar winding structure.

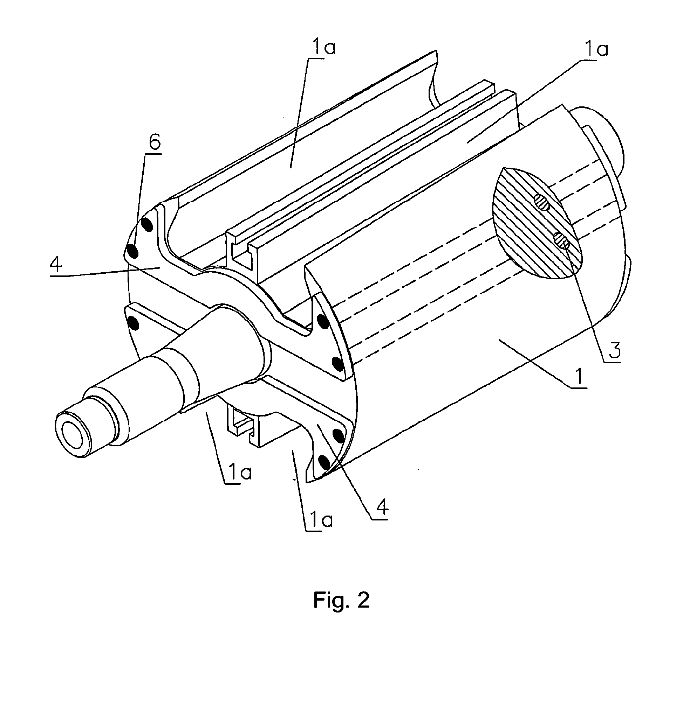

In Fig. 2, the number of the damping strips 3 in each of the two damping windings on the core of the rotor 1 is 4. A cross section of each of the damping strips 3 is circular with a diameter between 2 and 8 mm, and the thickness of the damping board 4 is between 1 and 8 mm. The damping strips 3 and the damping board 4 are made of non-ferrous metals, such as aluminum or copper. The reference number 6 indicates a welding point between the damping board 4 and a damping strip 3.

An angle of between 3°and 15° is formed between the winding slot 1 a on the core of the rotor 1 and the wire-embedding slot 2b on the core of the stator 2. To achieve this purpose, the winding slot 1 a on the core of the rotor 1 rotates an angle of between 3°and 15° with respect to the axial line of the rotor to turn the wire-embedding slot 2b on the core of the stator 2 into a straight slot, and vice versa, or the winding slot 1a on the core of the rotor 1 and the wire-embedding slot 2b on the core of the stator 2 both rotate through an angle of a certain degree with respect to the axial line of the generator, and finally an angle between of 3°and 15° is formed between the winding slot 1 a on the core of the rotor 1 and the wire-embedding slot 2b on the core of the stator 2. In this way, an angle is formed between the rotor 1 and the output winding embedded in the core of the stator 2, and thereby eliminating the influence of odd order harmonics on the output voltage waveform and causing the output voltage waveform to more closely approximate a sine wave.

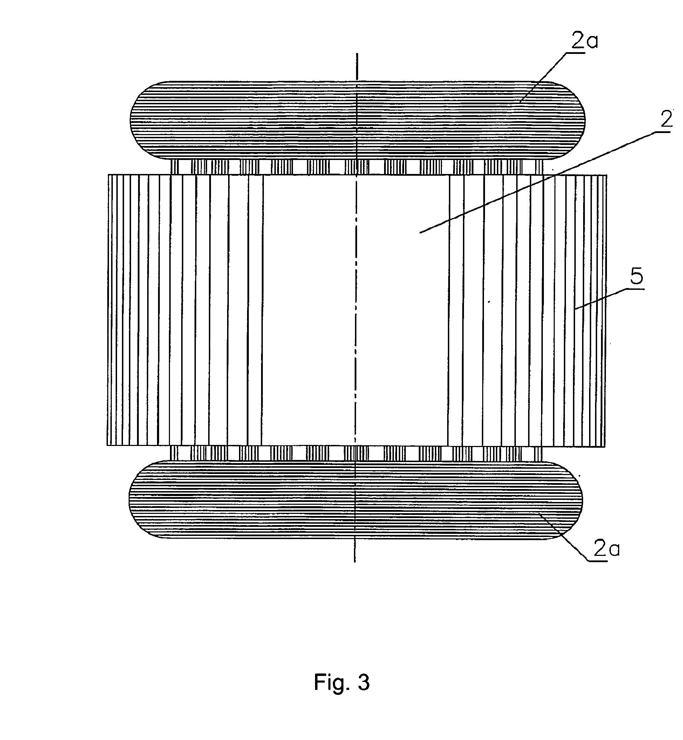

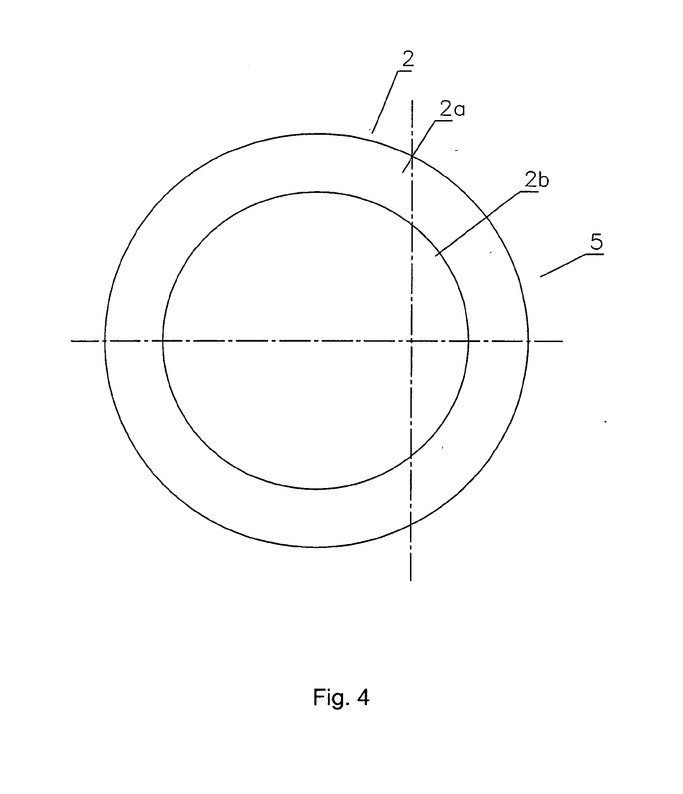

It can be seen from Figs. 3 and 4 that a plurality of axial grooves 5 is distributed over an outer surface of the core of the stator 2. The axial grooves 5 can effectively improve the magnetic path of the yoke of the stator 2 and enlarge the heat radiation area of the external cylindrical surface of the core of the stator 2. Thus, the temperature rise of the stator 2 can be effectively improved, so that the quality of the waveform of the output voltage of the generator is improved.

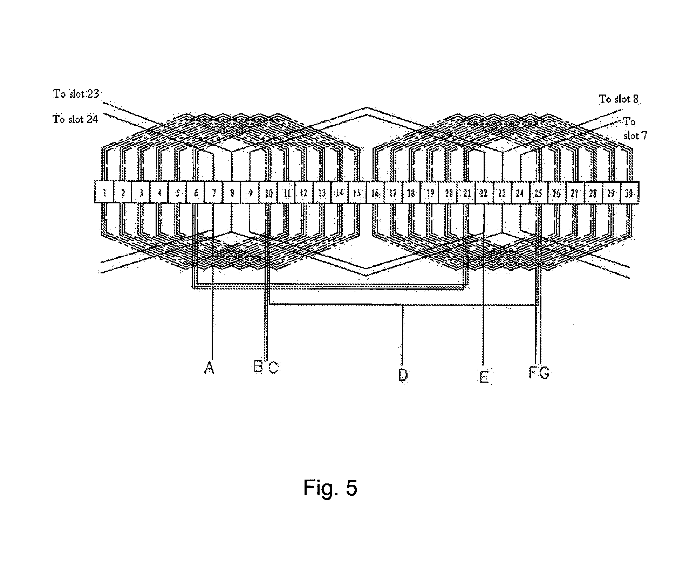

As shown in Fig. 5, the number of slots of the wire-embedding slot 2b is 30, the slots being numbered consecutively with Arabic numbers 1∼30. Real lines denote the primary winding I, and broken lines denote the sample winding, with spans of 1-10, 2-11, ..., 6-15, respectively forming the N Pole, the S Pole and so on. The 7th, 8th, 9th, 22nd, 23rd and 24th slots are secondary windings denoted by dash-dot-dot lines. A to F denote external connecting terminals (terminals A and D denote yellow wires of 0.75mm², terminals B and F denote a red and a blue wire of 1.5mm², respectively, terminal C denotes a brown wire of 0.75mm², and terminal E denotes a blue wire of 0.75mm²).

Modifications are possible within the scope of the appended claims.

## Claims

1. A miniature bipolar single-phase generator, comprising a rotor (1); and
a stator (2),
wherein
two damping windings are arranged on the core of the rotor (1); each of the two damping windings comprises a plurality of damping strips (3) and a damping board (4);
the damping board (4) is disposed on both ends of the core; the damping strip (3) passes in the axial direction through the core, and is tightly attached to the damping board (4); and
a winding coil (2a) on the stator (2) is an equidistant bipolar winding structure.

2. The miniature bipolar single-phase generator of claim 1, wherein
the number of the damping strips (3) in each of the two damping windings on the core of the rotor (1) is between 4 and 8;
a cross section of each of the damping strips (3) is circular with a diameter between 2 and 8 mm; and
a thickness of the damping board (4) is between 1 and 8 mm.

3. The miniature bipolar single-phase generator of claim 1, wherein an angle of between 3° and 15° is formed between the winding slot (1 a) on the core of the rotor (1) and a wire-embedding slot (2b) on the core of the stator (2).

4. The miniature bipolar single-phase generator of claim 3, wherein a plurality of axial grooves (5) is distributed over an outer surface of the core of the stator (2).

5. The miniature bipolar single-phase generator according of claim 1, wherein a plurality of axial grooves (5) is distributed over an outer surface of the core of the stator (2).

## Patentansprüche

1. Zweipoliger Miniatur-Einphasengenerator, der Folgendes umfasst:
einen Läufer (1) und
einen Ständer (2),
wobei
zwei Dämpfungswicklungen auf dem Kern des Läufers (1) angeordnet sind,
jede der zwei Dämpfungswicklungen mehrere Dämpfungsstreifen (3) und eine Dämpfungsplatte (4) umfasst,
die Dämpfungsplatte (4) an den beiden Enden des Blechpakets angeordnet ist,
der Dämpfungsstreifen (3) in der Axialrichtung durch das Blechpaket hindurchgeht und dicht an der Dämpfungsplatte (4) befestigt ist und
eine Wicklungsspule (2a) an dem Ständer (2) eine zweipolige Wicklungsstruktur mit konstantem Abstand ist.

2. Zweipoliger Miniatur-Einphasengenerator nach Anspruch 1, wobei:
die Zahl der Dämpfungsstreifen (3) in jeder der zwei Dämpfungswicklungen des Läufers (1) zwischen 4 und 8 beträgt,
ein Querschnitt jedes der Dämpfungsstreifen (3) kreisförmig ist, mit einem Durchmesser zwischen 2 und 8 mm, und
eine Dicke der Dämpfungsplatte (4) zwischen 1 und 8 mm beträgt.

3. Zweipoliger Miniatur-Einphasengenerator nach Anspruch 1, wobei ein Winkel von zwischen 3° und 15° zwischen dem Wicklungsschlitz (1 a) an dem Blechpaket des Läufers (1) und einem Drahteinbettungsschlitz (2b) an dem Blechpaket des Ständers (2) gebildet wird.

4. Zweipoliger Miniatur-Einphasengenerator nach Anspruch 3, wobei mehrere axiale Rillen (5) über eine Außenfläche des Blechpakets des Ständers (2) verteilt sind.

5. Zweipoliger Miniatur-Einphasengenerator nach Anspruch 1, wobei mehrere axiale Rillen (5) über eine Außenfläche des Blechpakets des Ständers (2) verteilt sind.

## Revendications

1. Générateur monophasé bipolaire miniature, comprenant :
un rotor (1); et
un stator (2),
dans lequel
deux enroulements d'amortissement sont disposés sur le noyau du rotor (1) ;
chacun des deux enroulements d'amortissement comprend une pluralité de bandes d'amortissement (3) et un panneau d'amortissement (4) ;
le panneau d'amortissement (4) est disposé aux deux extrémités du noyau ;
la bande d'amortissement (3) passe dans la direction axiale à travers le noyau, et est étroitement attachée au panneau d'amortissement (4) ; et
une bobine d'enroulement (2a) sur le stator (2) est une structure d'enroulement bipolaire équidistante.

2. Générateur monophasé bipolaire miniature selon la revendication 1, dans lequel
le nombre de bandes d'amortissement (3) dans chacun des deux enroulements d'amortissement sur le noyau du rotor (1) est entre 4 et 8,
une coupe transversale de chacune des bandes d'amortissement (3) est circulaire avec un diamètre entre 2 et8 mm ; et
une épaisseur du panneau d'amortissement (4) est entre 1 et 8 mm.

3. Générateur monophasé bipolaire miniature selon la revendication 1, dans lequel un angle entre 3° et 15° est formé entre la fente d'enroulement (1a) sur le noyau du rotor (1) et une fente d'intégration de fil (2b) sur le noyau du stator (2).

4. Générateur monophasé bipolaire miniature selon la revendication 3, dans lequel une pluralité de rainures axiales (5) est distribuée sur une surface extérieure du noyau du stator (2).

5. Générateur monophasé bipolaire miniature selon la revendication 1, dans lequel une pluralité de rainures axiales (5) est distribuée sur une surface extérieure du noyau du stator (2).
